Europäisches Patentamt

European Patent Office

Office européen des brevets

(19)

(11) Publication number: **0 113 455**
**A1**

# (12) EUROPEAN PATENT APPLICATION

(21) Application number: **83112513.3**

(22) Date of filing: **13.12.83**

(51) Int. Cl.³: **G 01 P 3/36**

(30) Priority: **15.12.82 US 449893**

(43) Date of publication of application:
**18.07.84 Bulletin 84/29**

(84) Designated Contracting States:
**DE FR GB IT SE**

(71) Applicant: **HONEYWELL INC.**
**Honeywell Plaza**
**Minneapolis Minnesota 55408(US)**

(72) Inventor: **Johnson, Allan P.**
**3215 Pierce Street**
**Minneapolis, Minn. 55418(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Apparatus for counting the number of fringe changes of a varying interference fringe pattern.**

(57) A readout apparatus for a ring laser angular rate sensor utilizes a phase locked loop (30 - 55) in order to provide a high resolution readout.

FIG 1

EP 0 113 455 A1

HONEYWELL INC.

Honeywell Plaza

Minneapolis, Minn. USA

December 12, 1983

A4110217 EP

Hz/ep

Apparatus for Counting the Number
of Fringe Changes of a Varying
Interference Fringe Pattern

The present invention relates to an apparatus according to the preamble of claim 1.

## BACKGROUND OF THE INVENTION

It is well known in the art of ring laser angular rate sensors to employ an optical means to generate an interference fringe pattern which is indicative of the phase relationship and beat frequency between the two counter-propagating waves utilized in the sensor. Angular rate information is obtained by counting fringe changes which move past a photodetector which corresponds to beat frequency cycles. The rate of change of the fringes, or fringe change frequency, is indicative of the rate of rotation of the sensor, and the total number of fringe changes is indicative of the angular rotation displacement of the sensor. Therefore, readout schemes commonly employed in ring laser rate sensors utilize a counting system for counting the fringe changes moving past a photodetector. Heretofore, dependable resolution of fringe movement is usually in the order of one-quarter of a fringe or count.

- 2 -

0113455

Therefore, it is the object of the present invention to provide a readout scheme in which high dependable resolution is obtainable. This object is achieved by the characterizing features of claim 1. Further advantageous embodiments of the present invention may be taken from the sub-claims.

## SUMMARY OF THE INVENTION

In the present invention, the output of a photodetector responsive to an interference pattern is presented to a phase locked loop which provides an output signal which is phase related to the output of the photodetector but which has a frequency greater than that of the input signal thereby improving resolution.

## DESCRIPTION OF THE DRAWINGS

FIGURE 1 is a schematic block diagram of the invention.

FIGURE 2 is a diagrammatic representation of an output scheme for a ring laser angular rate sensor.

-3-

## DETAILED DESCRIPTION OF THE INVENTION

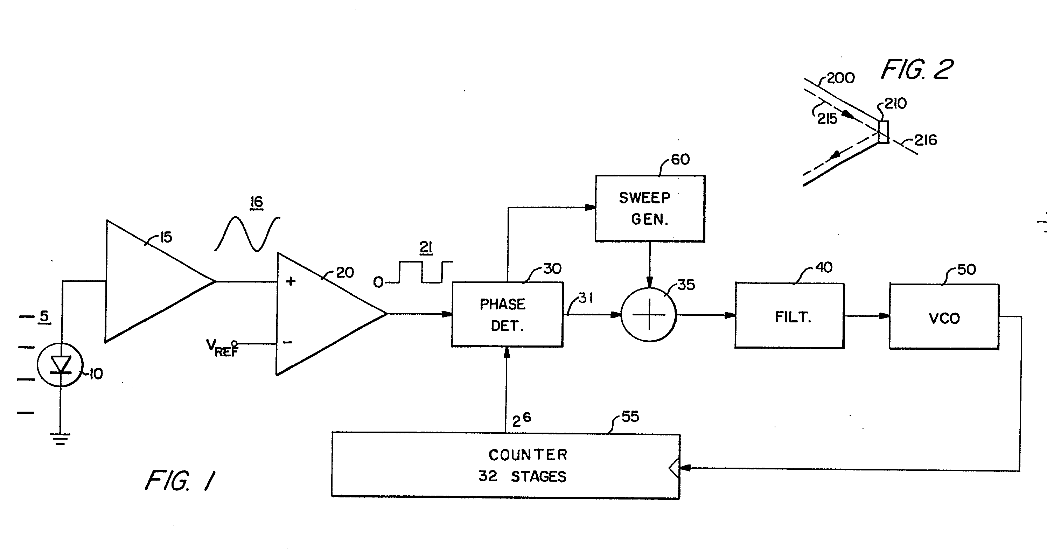

FIGURE 1 is a schematic block diagram of the invention of the present application. Shown in FIGURE 1 is a diagrammatic representation of an interference pattern designated by numeral 5. A photodetector 10 is fixed at some reference location so as to be responsive to the interference fringe pattern 5. The output of the photodetector is presented to a DC amplifier stage 15 for signal amplification thereof. The output of amplifier stage 15 is presented to a comparator 20 having one of its inputs connected to a reference voltage, $V_{REF}$. As shown in FIGURE 1, the positive input of comparator 20 is connected to the output of amplifier stage 15, and the negative input is connected to the reference voltage. The output signal of amplifier stage 15 is indicative of the intensity of the interference pattern established by the location of photodetector 15. The output of amplifier stage 15 provides an output signal which is related in phase and frequency to any variation of the intensity of the interference fringe pattern. The combination of photodetector 10, amplifier 15, and comparator 20 provides a detector means for subsequent counting of fringe changes of an interference fringe pattern having a constant or variable fringe change frequency.

In ring laser angular rate sensors, two counter-propagating waves establish a phase relationship therebetween and is responsive to any rotation of the sensor. As is well known in the art, an optical system, as part of the sensor, is usually employed which projects a portion of each of the counter-propagating waves or laser beams at a slight angle with each other to form an interference fringe pattern. Rotation of the sensor causes a frequency difference and corresponding varying phase difference and beat frequency between the waves resulting in a variation in the fringe pattern exhibited by pattern movement. A change of one complete fringe passing some reference point is equal to a $2\pi$ radian phase change between the counter-propagating waves. The magnitude of interference fringe pattern change is directly related to the angular rotation change of the sensor. The rate of change of the interference fringe pattern fringe changes is directly related to the rate of rotation of the sensor. Therefore, the greater the accuracy in measuring the magnitude or number of fringe changes which move past the detector the greater the accuracy of angular rotation. The detector means as shown in FIGURE 1 is that commonly employed in ring laser angular rate sensors for counting fringe changes to determine the angle of rotation.

Referring to FIGURE 1, the output of amplifier stage 15 is a signal proportional to intensity and varies as a sine function of intensity as indicated by numeral 16. The comparator 20 essentially wave shapes the output of amplifier stage 15 providing a square wave output as is indicated by numeral 21. The output of comparator 20 is herein referred to as an output beat signal since its frequency depends on the beat frequency between the waves forming the interference pattern. Each cycle of the square wave or output beat signal of comparator 20 corresponds to a change of one fringe moving past the detector, referred to as a count, and corresponds to the aforesaid $2\pi$ radian phase change. The detector means as thus far presented is commonly employed in other applications where the information provided by the varying interference fringe pattern is of use, for example, in other interferometric type apparatuses.

The embodiment of the invention illustrated in FIGURE 1 provides a system for enhancing the resolution obtainable for counting the number of fringe changes of a varying interference fringe pattern having a fringe change frequency, i.e. greater than zero. Again referring to FIGURE 1, the output of the detector means, mainly the output of comparator 20 is presented to a phase locked loop comprising phase detector 30, signal filter 40, voltage controlled oscillator 50, and counter 55. The phase locked loop components just presented are well known in the art and details of the specific blocks will not be described.

The output of comparator 20 is presented to a first input of phase comparator 30. The output of phase detector 30 is presented to signal filter 40 through summing circuit 35. The output of signal filter 40 is presented to a voltage controlled oscillator 50 having a frequency directly related to the output of signal filter 40. The output of the voltage controlled oscillator 50 is presented to counter 55 having a plurality of stages for counting the number of cycles of the output signal of voltage controlled oscillator 50.

Counter 55 may be an n-stage counter, for example, 32 stages. A selected stage provides an output signal for presentation to a second input to phase detector 30. For example, assume that the sixth stage provides the output signal to phase detector 30 where the least significant stage is defined to be n = 1.

The phase locked loop as just described will be phase locked when the output of the sixth stage of counter 55 is in phase with the output of comparator 20. In these circumstances, the output signal of voltage controlled oscillator 50 will be a phase synchronized output signal having a frequency which is 128 times the frequency of the output of comparator 20 and which is phase locked to both the output of counter 55 as well as the output of comparator 20, these latter two signals being also locked in phase.

Phase detector 30, as shown in FIGURE 1 includes an output signal 31 which is a digital signal indicating a phase locked condition, and is presented to an inhibit input of a sweep generator 60. The output of sweep generator 60 is presented as a second input to summing circuit 35 for summing with the output of phase detector 30. The purpose of sweep generator 60 is to initialize the phase locked loop in an appropriate manner. In some situations, the initialization scheme as just presented may be omitted entirely depending on the particular design of the phase locked loop. The initialization scheme may, of course, be provided by a variety of techniques and are within the scope of the present invention.

As indicated earlier, the output of the voltage controlled oscillator 50 of the phase locked loop provides a phase synchronized output signal which is phase related to the moving interference pattern having a frequency directly related to the fringe change frequency. Counter 55 functions as a dividing means for frequency dividing the phase synchronized output signal of the voltage controlled oscillator 50. As illustrated in FIGURE 1, having the output of the sixth stage of the synchronous counter as the second input to phase detector 30 results in dividing the voltage controlled oscillator by a value N where N is 128. Accordingly, the voltage controlled oscillator 50 produces 128 cycles for each fringe change of the interference pattern or in other words, 128 cycles for each fringe count. Thus, each cycle represents one/N of a fringe change moving past the detector. In ring laser angular rate sensors, or other interferometric devices, each cycle would represent $2\pi/N$ radians per cycle produced by the voltage controlled oscillator. Thus the resolution is improved by a factor of 128.

It would be obvious to those skilled in the art that the output of the voltage controlled oscillator may be presented to a separate counter for counting the number of cycles produced by the voltage controlled oscillator for determining the number of fringe counts by taking that number in the counter and dividing it by the number N produced by the dividing means shown as counter 55 in FIGURE 1. It is, of course, possible to select any value N which would be an $n^{th}$ power of 2 utilizing an n-stage counter, or another dividing means may be used to provide any value of N. Subsequently, each cycle produced by the voltage controlled oscillator would represent then 1/N of a fringe change moving past the detector.

It should be noted that the $7^{th}$ stage of counter 55, in the detailed example just described, represents the least significant count of fringes. Thus, the numeric value of stage 32 through 7 represents total fringe count and the numeric value of stages 1 through 6 represents the fringe change fraction of a count. Thus, a computer or the like, not shown, can read counter 55 for purposes of obtaining a readout of total integral counts and the fraction of a count upon command.

Although a linear interference pattern has been illustrated in FIGURE 1, the embodiment of the invention illustrated may also be responsive to a "spot" interference pattern. A spot interference fringe pattern is one in which concentric interference fringe bands are produced as a result of having two collinear waves impinging on photodetector 10.

Shown in FIGURE 2 is a diagrammatic representation of a portion of a ring laser angular rate sensor illustrating an emission of a portion of one of the counter-propagating waves therein. Such a system is detailed in U.S. Patent 4, 152,071.

A sensor 200 is usually provided with an optical device 210 for emitting a portion of a counter-propagating wave 215, that portion being indicated by numeral 216. The embodiment of the invention illustrated in FIGURE 1 may also be utilized as a high resolution sensor readout by positioning photodetector 10 to be responsive to laser beam portion 216 instead of interference pattern 5.

As described in U.S. Patent 4,152,071, the individual laser beams are amplitude modulated at a frequency directly equal to the frequency difference between the counter-propagating waves. This frequency is usually referred to as the beat frequency. The beat frequency is the same as the fringe change frequency referred to above. Therefore, the embodiment illustrated in FIGURE 1 is directly applicable to monitoring the beat frequency of the laser beam amplitude modulation. Counting the beat frequency cycles is analogous to counting the interference fringe pattern fringe changes.

Referring to FIGURES 1 and 2, interference pattern 10 may be replaced by beam 216 so as to impinge on photodetector 10. The output of photodetector 10 is a signal indicative of the intensity of beam 216 which contains an intensity variation at the beat frequency of the laser beams. As before, amplifier 15 and comparator 20 provide an output beat signal related in phase and frequency to the beat frequency variation of laser beam 216. The output of comparator 20, as before, is presented to the phase locked loop in the same manner as described above for counting the output beat signal with high resolution. Thus, the embodiment shown in FIGURE 1 provides a high

-11-

resolution output circuit for ring laser angular rate sensors without use of an interference fringe pattern by monitoring a portion of one of the counter-propagating laser beams.

The embodiment of the invention shown in FIGURE 1 is particularly useful for ring laser angular rate sensors in which a constant rotation bias is applied to the sensor so as to provide a relatively high fringe change frequency or beat frequency and which is modulated only by inertial inputs to the rotation sensor.

In the foregoing description of the embodiment of the invention shown in FIGURE 1, a phase locked loop is utilized in combination with a detector means for providing high resolution of a varying interference fringe pattern projected on a detector at a fixed location. The apparatus as described, although useful as part of any interference fringe pattern monitoring system, is specifically applicable to ring laser angular rate sensors for improving the resolution thereof. Further, the invention as described may also be applicable to monitoring beat frequency modulation of a single laser beam of a ring laser angular rate sensor for obtaining high resolution rate information. It is therefore to be understood that within the scope of the depending claims the invention may be practiced otherwise as specifically described.

Claims:

1. Apparatus for counting the number of fringe changes of a varying interference fringe pattern having a fringe change frequency, in particular readout for a ring laser angular rate sensor, comprising detector means (10) responsive to said varying interference pattern for providing an output beat signal related in phase and frequency to the intensity of the varying interference fringe pattern, c h a r a c t e r i z e d  b y phase locked loop means (30 - 55) responsive to said output beat signal for providing a phase synchronized output signal which is phase related to said output beat signal and having a frequency directly related to said fringe change frequency.

2. Apparatus according to claim 1, c h a r a c t e r - i z e d  i n  t h a t  said phase locked loop means includes:
   phase detection means (30) responsive to said output beat signal and a second signal for providing a phase difference output signal indicative of the phase difference between said output beat signal and said second signal; oscillator means (50) responsive to said phase difference output signal for providing said phase synchronized output signal; and
   dividing means (55) capable of frequency dividing said phase synchronized output signal for producing said second signal so as to have a frequency substantially equal to said phase synchronized output signal divided by a value N, said phase locked loop means being arranged in a manner so that said second signal is synchronized in phase with said output beat signal.

3. Apparatus according to claim 1, c h a r a c t e r - i z e d  i n  t h a t  said phase locked loop means includes:
   means for producing said phase synchronized signal so as to have a frequency being a multiple N of said fringe change frequency wherefrom each cycle change of said phase synchronized output signal represents 1/N of a fringe change of said varying interference fringe pattern.

4. Apparatus according to claim 3, c h a r a c t e r - i z e d  i n  t h a t  said phase locked loop means includes:
an n-stage counter (55) responsive to said phase synchronized output signal for counting cycles of said phase synchronized output signal such that each count of said couter is representative of 1/N of a fringe change of said varying interference fringe pattern.

5. Apparatus according to claim 2, c h a r a c t e r - i z e d  i n  t h a t  said dividing means comprises:
an n-stage counter (55) capable of counting each cycle of said phase synchronized output signal, said counter having a selected $n^{th}$-stage output signal providing said second signal thereby resulting in said phase synchronized output signal having a frequency being an $n^{th}$ power of 2 times said fringe change frequency, wherein said counter's least significant stage is n = 1.

6. Apparatus according to claim 1, further c h a r a c - t e r i z e d  b y  means for counting integral cycles of said output beat signal.

FIG. 2

FIG. 1

## DOCUMENTS CONSIDERED TO BE RELEVANT

EP 83 11 2513

| Category | Citation of document with indication, where appropriate, of relevant passages | Relevant to claim | CLASSIFICATION OF THE APPLICATION (Int. Cl. ³) |
|---|---|---|---|
| X | GB-A-2 017 394 (RAYTHEON COMPANY) <br> * Page 4, lines 4-8, 24-38; figures 4,5 * | 1-5 | G 01 P 3/36 |
| A | GB-A-2 064 129 (DIESEL KIKI CO., LTD.) <br> * Page 2, lines 7-10, 55-69; figure 2 * | 1-6 | |
| A | FR-A-2 360 885 (HONEYWELL INC.) <br> * Page 6, line 36 - page 7, line 14; figure 7 * | 1 | |

| | |
|---|---|
| | **TECHNICAL FIELDS SEARCHED (Int. Cl. ³)** |
| | G 01 P <br> G 01 C <br> H 03 L |

The present search report has been drawn up for all claims

| Place of search | Date of completion of the search | Examiner |
|---|---|---|
| THE HAGUE | 29-03-1984 | HANSEN P. |